# EUROPEAN PATENT SPECIFICATION

(11) **EP 4 343 921 B1**
(45) Date of publication and mention of the grant of the patent: **29.01.2025**
(21) Application number: 22804482.2
(22) Date of filing: 15.04.2022
(51) Int. Cl.: H01M 10/613, H01M 10/625, H01M 10/651, H01M 10/653, H01M 10/6556, H01M 10/6568

(54) **COOLING STRUCTURE, BATTERY UNIT, AND MANUFACTURING METHOD FOR COOLING STRUCTURE**
KÜHLSTRUKTUR, BATTERIEEINHEIT UND HERSTELLUNGSVERFAHREN FÜR DIE KÜHLSTRUKTUR
STRUCTURE DE REFROIDISSEMENT, UNITÉ DE BATTERIE ET PROCÉDÉ DE FABRICATION DE STRUCTURE DE REFROIDISSEMENT

(30) Priority: 20.05.2021 JP 2021085198
(43) Date of publication of application: 27.03.2024
(73) Proprietor: NIPPON STEEL CORPORATION, Chiyoda-ku Tokyo 100-8071 (JP)
(72) Inventor: KODAMA, Shinji, Tokyo 100-8071 (JP); MATSUI, Sho, Tokyo 100-8071 (JP); MIYAKE, Kyohei, Tokyo 100-8071 (JP); MIKAZUKI, Yutaka, Tokyo 100-8071 (JP); OKE, Takashi, Tokyo 100-8071 (JP); NORITA, Katsunari, Tokyo 100-8071 (JP)
(74) Representative: Zimmermann & Partner Patentanwälte mbB
(86) International application number: PCT/JP2022/017937
(87) International publication number: WO 2022/244568

(56) References cited:
- DE-T5- 112011 103 338
- JP-A- 2014 128 889
- JP-A- 2014 241 339
- US-A1- 2018 205 125
- US-B2- 10 038 226

## Description

### [Technical Field of the Invention]

The present invention relates to a cooling structure, a battery unit, and a manufacturing method of the cooling structure.

### [Related Art]

In order to reduce the amount of carbon dioxide emissions, with respect to automobiles, electric vehicles (EV) are being developed. In a battery box of an EV, it is necessary to provide a cooling structure in order to prevent deterioration of a battery due to a temperature rise. Hitherto, an air-cooling type has been the mainstream of for the cooling structure, but in recent years, with an increase in a capacity of batteries, a water-cooling type having a high cooling capacity is has increasingly been adopted (for example, Patent Documents 1 to 3). In the water-cooling type battery pack, a water-cooling medium flow path through which cooling water flows is formed outside the battery pack.

US 10 038 226 B2 discloses that a cooling plate for a battery pack with a plurality of battery cells is provided. The cooling plate includes a cooling fin with a substantially planar surface and a perimeter. The cooling plate includes a frame abutting the cooling fin and forming a seal with the cooling fin adjacent the perimeter of the same. The frame and the cooling fin define at least one fluid inlet, at least one fluid outlet, and a flow channel therebetween. The at least one fluid inlet and the at least one fluid outlet are disposed through the seal and are in fluid communication with the flow channel. The flow channel is disposed adjacent the perimeter and in heat transfer communication with the substantially planar surface of the cooling fin. A battery pack with the cooling plate, and a method for controlling a temperature of the battery pack, are also provided.

### [Citation List]

### [Patent Document]

[Patent Document 1]
   Japanese Unexamined Patent Application, First Publication No. 2020-107443
[Patent Document 2]
   Japanese Patent No. 6125624
[Patent Document 3]
   Japanese Unexamined Patent Application, First Publication No. 2012-17954

### [Summary of Invention]

### [Problems to be Solved by the Invention]

The outer wall portion and the cooling structure of the water-cooling type battery pack are often made of aluminum having high corrosion resistance to a cooling liquid. However, aluminum has a problem in terms of cost. In addition, since aluminum is soft, it is difficult to reduce the weight of the outer wall by thinning the outer wall while securing the outer wall strength in a cooling structure formed of an aluminum plate. When the material of these members is a steel sheet, it is possible to provide a water-cooling type battery pack at low cost and reduce the weight thereof.

A long-life coolant (LLC) aqueous solution containing an organic component flows as a cooling liquid in the water-cooling medium flow path. Therefore, the member constituting the flow path for a water-cooling medium is required to have high corrosion resistance against a cooling liquid. In addition, since the battery pack and the cooling structure are disposed on the bottom surface of the automobile, the battery pack and the cooling structure are exposed to an external environment. Therefore, the members constituting the battery pack and the cooling structure are required to have a corrosion resistance equivalent to that of the suspension parts of the automobile. Hereinafter, corrosion resistance to a cooling liquid is referred to as cooling liquid corrosion resistance or inner surface corrosion resistance, and corrosion resistance to an external environment is referred to as outer surface corrosion resistance. In addition, when "corrosion resistance", is simply referred to, this refers to both cooling liquid corrosion resistance and outer surface corrosion resistance.

Plating is one of means for enhancing corrosion resistance of a steel sheet. For example, by forming plating such as an Al-based plating of a Zn-based plating on the surface of the steel sheet, both cooling liquid corrosion resistance and outer surface corrosion resistance can be enhanced. However, when the present inventors have attempted to manufacture a cooling structure using a plated steel sheet, they have found that plating damage is extremely likely to occur at a joint portion of the plated steel sheet and the vicinity thereof, thereby impairing corrosion resistance of the steel sheet.

In addition, as a matter of course, the cooling structure is required to have high cooling efficiency. In addition, liquid tightness of the flow path is also required to maintain cooling efficiency and suppress LLC leakage. However, as of yet, there have been almost no examples of a cooling structure in which a flow path is formed using a plated steel sheet, and therefore, a method for joining plated steel sheets has not been studied. Patent Document 3 discloses a cooler in which an aluminum-plated steel sheet is brazed, but this cooler is assembled inside a hybrid vehicle, and no consideration is given to outer surface corrosion resistance. In addition, at the time of brazing of the cooler, the member is fixed using a weight in order to avoid thermal strain of the member. Therefore, it is expected that the plating on the outer surface of the cooler would have scratches and have poor in outer surface corrosion resistance. In addition, in the manufacture of the cooler described in Patent Document 3, it is necessary to extremely reduce the deformation amount. Therefore, the cooler described in Patent Document 3 is not suitable for upsizing.

Spot welding is usually used as means for firmly joining plated steel sheets, but spot-welding damage plating around a weld and damages corrosion resistance. In particular, inside the flow path, which is a severe corrosive environment exposed to the LLC, slight plating damage is also a problem. In addition, since spot welding is point joining, it is difficult to ensure liquid tightness of the flow path. Although it is possible to secure the liquid tightness of the spot weld using a sealer, the sealer may be deteriorated by the LLC. Therefore, in manufacturing the cooling structure, a joining method capable of securing liquid tightness of the flow path while maintaining corrosion resistance is also required.

In view of the above circumstances, an object of the present invention is to provide a cooling structure having high cooling efficiency, excellent liquid tightness of a flow path, and further having high cooling liquid corrosion resistance and outer surface corrosion resistance, a battery unit, and a manufacturing method of the cooling structure.

### [Means for Solving the Problem]

The present invention is as follows.
(1) A cooling structure according to an aspect of the present invention includes a press forming member having a groove part and a bank part provided around the groove part, a flow path upper lid which is a flat sheet overlapped at a position covering the groove part of the press forming member and forms a flat cooling surface, and a joint portion which joins opposing surfaces of the flow path upper lid and the bank part to form a flow path through which a cooling liquid is capable of flowing, in which the press forming member and the flow path upper lid are plated steel sheets having a base steel sheet, and having an Al-based plating having a film thickness of 10.0 µm or more, or a Zn-based plating having a film thickness of 5.0 µm or more, in which a sheet thickness of the plated steel sheets is 0.3 mm to 1.2 mm, the joint portion is made of a joining metal which brazes the base steel sheets of the press forming member and the flow path upper lid to each other, the flow path includes a parallel flow path portion in which a plurality of partial flow paths extending along a first direction are arranged in a second direction orthogonal to the first direction, and in a cross section of the parallel flow path portions perpendicular to the first direction, when the width of a region, in which a distance between the bank part and the flow path upper lid is less than 5 mm, and which is located between adjacent partial flow paths, is defined as a partial flow path interval, and the width of the joining metal located between the adjacent partial flow paths is defined as a joining width, the partial flow path interval is 20 mm or less and the joining width is 3 mm or more in a part or all of the parallel flow path portions.
(2) In the cooling structure described in (1) above, a part or all of the joining metal may be the Al-based plating of the Zn-based plating.
(3) In the cooling structure described in (1) or (2) above, a plating damage proportion on an outer surface of the cooling structure may be 20% or less, and the base steel sheet may not be exposed on the outer surface of the cooling structure.
(4) In the cooling structure described in any one of (1) to (3) above, a part of the joint portion may include one or more additional joints selected from the group including a spot weld, a projection weld, a laser weld, and a caulked joint.
(5) A battery unit according to another aspect of the present invention includes a battery cell, a battery pack in which the battery cell is housed, and the cooling structure described in any one of (1) to (4) above, in which the flow path upper lid of the cooling structure is joined to the battery pack.
(6) A battery unit according to another aspect of the present invention includes a battery cell, a battery pack in which the battery cell is housed, and the cooling structure described in any one of (1) to (4) above, in which the flow path upper lid of the cooling structure is the battery pack.
(7) In the battery unit described in (5) or (6) above, a sheet thickness of a steel sheet forming the battery pack may be 0.3 mm to 1.2 mm, and the steel sheet forming the battery pack may have an Al-based plating of a Zn-based plating.
(8) A manufacturing method of a cooling structure according to another aspect of the present invention includes press forming a steel sheet to obtain a press forming member having a groove part and a bank part provided around the groove part, overlapping and fixing a flow path upper lid which is a flat sheet at a position covering the groove part of the press forming member, and heating a brazing material disposed between the flow path upper lid and a top portion of the bank part of the press forming member to join opposing surfaces of the flow path upper lid and the bank part to obtain a joint portion forming a flow path through which a cooling liquid is capable of flowing, in which the press forming member and the flow path upper lid are plated steel sheets having a base steel sheet, and having an Al-based plating having a film thickness of 10.0 µm or more, or a Zn-based plating having a film thickness of 5.0 µm or more, in which a film thickness of the plated steel sheets is 0.3 mm to 1.2 mm, the joint portion is made of a joining metal which brazes the base steel sheets of the press forming member and the flow path upper lid to each other, the flow path includes a parallel flow path portion in which a plurality of partial flow paths extending along a first direction are arranged in a second direction orthogonal to the first direction, and in a cross section of the parallel flow path portions perpendicular to the first direction, when the width of a region in which a distance between the bank part and the flow path upper lid is less than 5 mm, and which is located between adjacent partial flow paths, is defined as a partial flow path interval, and the width of the joining metal located between the adjacent partial flow paths is defined as a joining width, the partial flow path interval is 20 mm or less and the joining width is 3 mm or more in a part or all of the parallel flow path portions.
(9) The manufacturing method of a cooling structure described in (8) above may further include applying the brazing material to one or both of the top portion of the groove part of the press forming member and a region of the flow path upper lid joined to the top portion before the flow path upper lid is overlapped on the press forming member.
(10) In the manufacturing method of a cooling structure described in (8) or (9) above, a part or all of the joining metal may be the Al-based plating or the Zn-based plating.
(11) In the manufacturing method of a cooling structure described in (8) to (10) above, the top portion of the bank part and a part of the flow path upper lid may be joined by one or more types of joining means selected from the group including spot welding, projection welding, laser welding, and caulked joining before forming the joint portion, thereby fixing the flow path upper lid and the press forming member.
(12) In the manufacturing method of a cooling structure described in any one of (8) to (11) above, the top portion of the bank part may be a flat surface, and the area of a contact section between the fixing jig for fixing the flow path upper lid and the press forming member and the top portion of the bank part may be 30% or less of the area of the flat surface forming the top portion of the bank part on the outer surface of the cooling structure.
(13) In the manufacturing method of a cooling structure described in any one of (8) to (12) above, the brazing material may be heated by irradiating a portion in which the brazing material is disposed with a laser beam.

### [Effects of the Invention]

According to the present invention, it is possible to provide a cooling structure having high cooling efficiency, excellent liquid tightness of a flow path, and further having high cooling liquid corrosion resistance and outer surface corrosion resistance, a battery unit, and a manufacturing method of the cooling structure.

### [Brief Description of the Drawings]

FIG. 1A is a cross-sectional view of a cooling structure perpendicular to a plurality of partial flow paths extending parallel to each other.
FIG. 1B is a schematic view showing a joining width B and a partial flow path interval s.
FIG. 2A is a plane view of the cooling structure in which a flow path connecting portion and a partial flow path are orthogonal to each other as viewed from a press forming member side.
FIG. 2B is a plane view of the cooling structure in which a flow path connecting portion has a branch structure as viewed from a press forming member side.
FIG. 3A is a cross-sectional view of a cooling structure having an additional joint 15.
FIG. 3B is a plane view of the cooling structure having the additional joint 15.
FIG. 4A is a perspective view of a battery unit.
FIG. 4B is a cross-sectional view of a battery unit using a battery pack as a flow path upper lid.
FIG. 4C is a cross-sectional view of the battery unit in which the battery pack and the flow path upper lid are joined.
FIG. 5 is a flowchart of a manufacturing method of the cooling structure.
FIG. 6A is a diagram illustrating a method of using a fixing jig having a rod-shaped protrusion portion.
FIG. 6B is a diagram illustrating a method of using a fixing jig having a flat sheet-shaped protrusion portion.
FIG. 7 is a diagram illustrating a brazing method using a laser.

### [Embodiments of the Invention]

Hereinafter, preferred embodiments of the present invention will be described in detail with reference to the accompanying drawings.

### (1. Cooling structure)

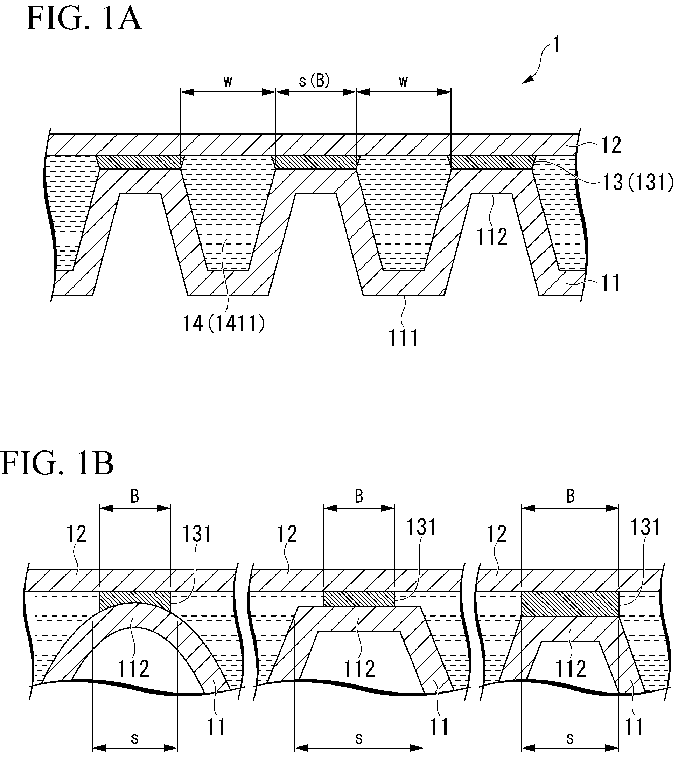

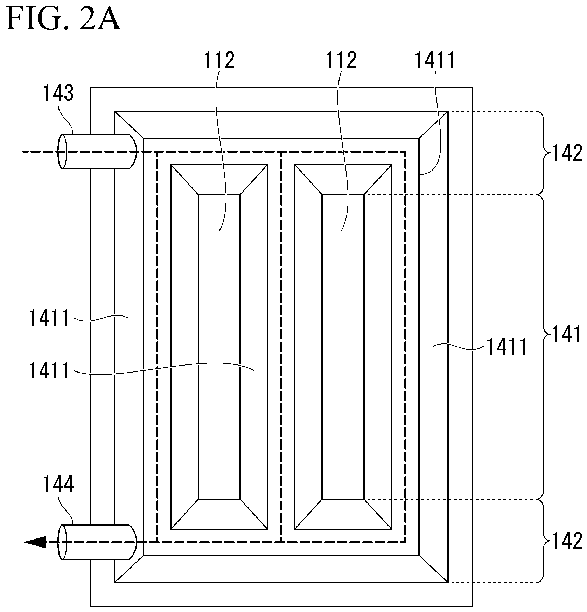

First, a cooling structure according to a first embodiment of the present invention will be described. As illustrated in FIGS. 1A and 2A, a cooling structure 1 according to the present embodiment includes a press forming member 11, a flow path upper lid 12, and a joint portion 13 that joins these components. The joint portion 13 is formed by brazing. FIG. 1A is a cross-sectional view of the cooling structure 1, and FIG. 2A is a plane view of the cooling structure 1 from the press forming member 11 side.

The press forming member 11 is a member obtained by press forming a plated steel sheet, and includes a groove part 111 and a bank part 112 provided around the groove part 111. The flow path upper lid 12 is a member forming a flat cooling surface, has a flat sheet shape, and is overlapped at a position covering the groove part 111 of the press forming member 11.

The press forming member 11 and the flow path upper lid 12 are joined by the joint portion 13. Specifically, the joint portion 13 joins opposing surfaces of the flow path upper lid 12 and the bank part 112 of the press forming member 11. As a result, the flow path upper lid 12 and the groove part 111 form a flow path 14 through which the cooling liquid is capable of flowing. As indicated by a broken line in FIG. 2A, in the flow path 14, any cooling liquid such as LLC introduced from a cooling liquid inlet 143 can flow to a cooling liquid outlet 144. Accordingly, it is possible to cool the flow path upper lid 12 as a cooling surface and an arbitrary object in contact with the flow path upper lid 12. In the flow path illustrated in FIG. 2A, the plurality of partial flow paths 1411 extending along the first direction includes a parallel flow path portion 141 arranged in the second direction orthogonal to the first direction, and a flow path connecting portion 142 that communicates these partial flow paths 1411. A specific configuration of the flow path 14 will be described later.

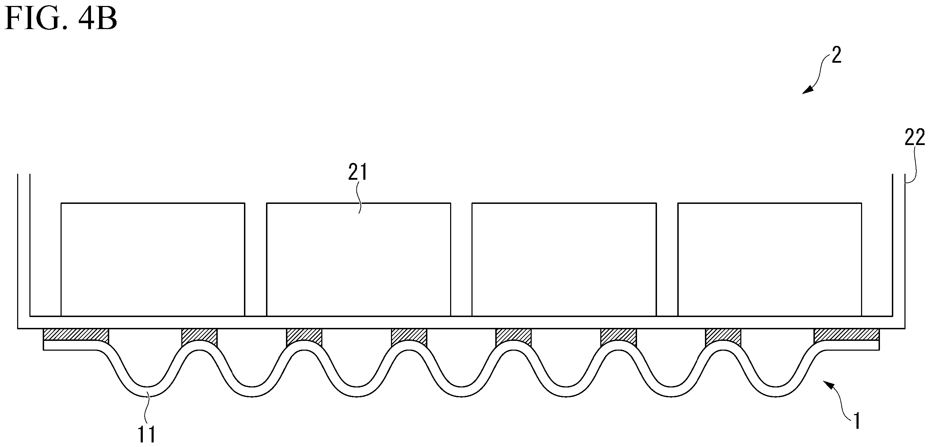

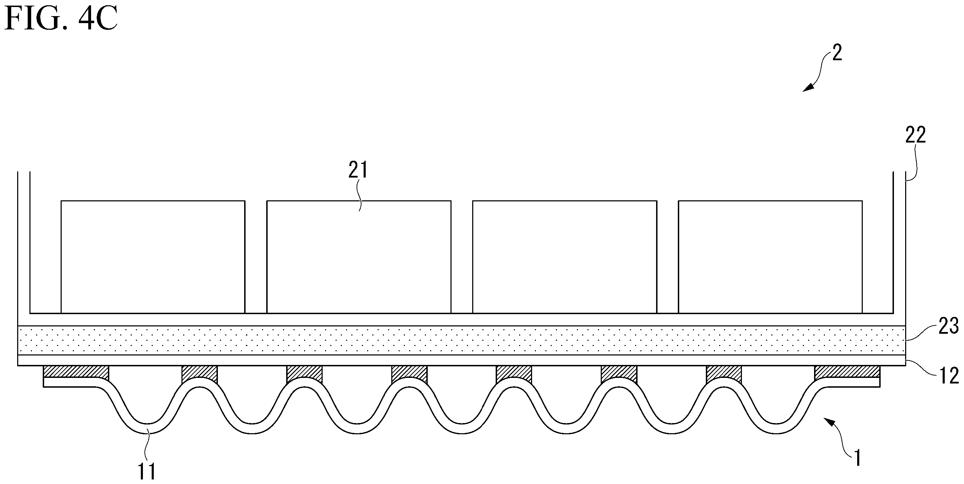

A shape of the bank part 112 is not particularly limited. In the press forming member 11 illustrated in FIG. 1A, a cross section of the bank part 112 has a trapezoidal shape. On the other hand, as illustrated in the lower part of FIGS. 4B and 4C, the press forming member 11 may be a so-called corrugated plate, and the cross section of the bank part 112 may have a partially circular shape or an arc shape. Similarly, the shape of the groove part 111 is also not particularly limited, and a trapezoidal shape, a partially circular shape, an arc shape, or various other suitable shapes can be adopted as the cross section thereof.

The press forming member 11 and the flow path upper lid 12 are plated steel sheets having a base steel sheet and plating provided on the surface of the base steel sheet. The sheet thickness of the plated steel sheet, that is, the sheet thickness of the press forming member 11 and the flow path upper lid 12 is 0.3 mm or more. This is because when the sheet thickness is less than 0.3 mm, it is difficult to secure the press formability and the rigidity of the cooling structure 1. The sheet thicknesses of the press forming member 11 and the flow path upper lid 12 may be 0.4 mm or more, 0.5 mm or more, or 0.8 mm or more. On the other hand, the sheet thickness of the plated steel sheet forming the press forming member 11 and the flow path upper lid 12 is 1.2 mm or less. When the sheet thickness of the press forming member 11 is too large, it becomes difficult to bring the press forming member 11 into close contact with the flow path upper lid 12, and the liquid tightness of the flow path cannot be secured. In addition, in a case where the sheet thickness of the flow path upper lid 12 is too large, the cooling efficiency of the cooling structure 1 is impaired. The sheet thicknesses of the press forming member 11 and the flow path upper lid 12 may be 1.1 mm or less, 1.0 mm or less, or 0.8 mm or less. The press forming member 11 and the flow path upper lid 12 may have different sheet thicknesses. Since the cooling efficiency increases as the sheet thickness decreases, it is preferable that the flow path upper lid 12 is thin.

The base steel sheet of the plated steel sheet forming the press forming member 11 and the flow path upper lid 12 is not particularly limited. For example, in order to further increase the rigidity of the cooling structure 1, the base steel sheet of the flow path upper lid 12 may be a high strength steel sheet having a tensile strength of 980 MPa or more. On the other hand, in order to further enhance the press formability, the base steel sheet of the press forming member 11 may be a soft steel sheet having a tensile strength of about 270 MPa, for example, SPCC. Various forms according to the shape and application of the cooling structure 1 can be applied to the base steel sheet forming the press forming member 11 and the flow path upper lid 12. Examples of the base steel sheet include IF steel to which Ti, Nb, B, or the like is added, Al-k steel, Cr-added steel, stainless steel, high tensile strength steel sheets, low-carbon steel, medium-carbon steel, high-carbon steel, alloy steel, and the like.

Plating of the plated steel sheet forming the press forming member 11 and the flow path upper lid 12 is the Al-based plating having a film thickness of 10.0 µm or more, or the Zn-based plating having a film thickness of 5.0 µm or more. Further, a chemical conversion coating treatment may be applied to the surface layer area of the plating. By using the Al-based plating or the Zn-based plating, it is possible to ensure the cooling liquid corrosion resistance and the outer surface corrosion resistance of the press forming member 11 and the flow path upper lid 12. As a result, corrosion of the cooling structure 1 due to the cooling liquid is suppressed, so that it is possible to suppress contamination (elution of components of the cooling structure 1 into the cooling liquid) that causes a decrease in thermal conductivity and clogging. In addition, outer surface corrosion can be suppressed, and the life of the cooling structure 1 can be extended. Furthermore, by setting the film thickness of plating within the above range, plating functions as a brazing material, and brazing failure can be avoided. That is, these plating steps also have a function of securing liquid tightness of the cooling structure 1.

When the plating type of the plated steel sheet is the Al-based plating, the film thickness of the Al-based plating is 10.0 µm or more. As a result, the Al-based plating functions as a brazing material at the time of brazing, and joining failure of the joint portion can be suppressed. In addition, the corner portion of the press forming member 11 tends to have insufficient corrosion resistance due to thin plating, but the corrosion resistance of the corner portion can be secured by setting the film thickness of the Al-based plating to 10.0 µm or more.

The component of the Al-based plating is not particularly limited. The plated layer of the Al-based plated steel sheet is, for example, two-component or multicomponent plating in which the Al content is 70 mass% or more, preferably 70 to 98 mass% of the Al content and 2 to 15 mass% of the Si content. A more preferable range of the Si content is 3 to 15 mass%. By setting the Si content within the above range, the workability and corrosion resistance of the Al-based plated steel sheet can be enhanced. As impurity elements in the Al-based plating, a trace amount of Fe, Ni, Co, or the like may be interposed. In addition, if necessary, Mg, Sn, mischmetal, Sb, Zn, Cr, W, V, Mo, and the like may be contained in the Al-based plating. The manufacturing method of the Al-based plated steel sheet is not particularly limited, but melt flux plating, hot-dip plating by a sendzimir method, an all-radiant method, or the like, electro plating, and vapor deposition plating are preferable.

In order to further enhance the outer surface corrosion resistance and the cooling liquid corrosion resistance of the Al-based plated steel sheet or the like, it is preferable that a film containing a Zr-based component, a Ti-based component, or a Si-based component as a main component (for example, 50 mass% or more in terms of mass%) is formed as a chemical conversion coating film on the surface of the Al-based plated steel sheet or the like. The film may contain an organic component.

Examples of the chemical conversion coating film include Japanese Unexamined Patent Application, First Publication No. 2008-115442, Japanese Unexamined Patent Application, First Publication No. 2013-7108, Japanese Unexamined Patent Application, First Publication No. 2004-232040, Japanese Patent No. 3302676, Japanese Patent No. 4776458, and Japanese Patent No. 5336002. Therefore, the chemical conversion coating films listed in these publications can be suitably used as the chemical conversion coating film of the present embodiment.

When the plating type of the plated steel sheet is Zn-based plating, the film thickness of the Zn-based plating is 5.0 µm or more. As a result, the Zn-based plating functions as a brazing material at the time of brazing, and joining failure of the joint portion can be suppressed. Since the Zn-based plating has a sacrificial anticorrosion function, the Zn-based plating can exhibit necessary corrosion resistance even when the film thickness is thinner than that of the Al-based plating.

The component of the Zn-based plating is not particularly limited. Examples of the Zn-based plated steel sheet include a zinc-plated steel sheet, a zinc-nickel plated steel sheet, a zinc-iron plated steel sheet, a zinc-chromium plated steel sheet, a zinc-aluminum-plated steel sheet, a zinc-titanium plated steel sheet, a zinc-magnesium plated steel sheet, a zinc-manganese plated steel sheet, a zinc-aluminum (Al)-magnesium (Mg) plated steel sheet, and a zinc-aluminum-magnesium-silicon plated steel sheet. Furthermore, it is also possible to use a Zn-based plated steel sheet in which a small amount of different metal elements or impurities such as cobalt, molybdenum, tungsten, nickel, titanium, chromium, aluminum, manganese, iron, magnesium, lead, bismuth, antimony, tin, copper, cadmium, and arsenic are contained in these plated layers, or an inorganic substance such as silica, alumina, or titania is dispersed. Furthermore, the above-described plating can be combined with other types of plating, and for example, multilayer plating combined with iron plating, iron-phosphorus plating, nickel plating, cobalt plating, or the like is also applicable. The plating method is not particularly limited, and may be any known method such as an electro plating method, a hot-dip plating method, a vapor deposition plating method, a dispersion plating method, or a vacuum plating method.

Furthermore, an inorganic film or a resin film may be formed as a chemical conversion coating film on the surface of the Zn-based plated steel sheet. The inorganic film contains a Si-based component or a Zr-based component as a main component (for example, 50 mass% or more as mass%). The inorganic film may contain an organic component.

The inorganic film or the resin film preferably has conductivity. In this case, weldability or electrodeposition coating properties of the Zn-based plated steel sheet can be improved. Furthermore, the inorganic film is preferably composed of a compound phase containing one or more of a Si-O bond, a Si-C bond, and a Si-OH bond. In addition, an acrylic resin described later is preferably contained in the compound phase. When these requirements are satisfied, adhesion of the chemical conversion coating film can be enhanced, so that outer surface corrosion resistance and cooling liquid corrosion resistance of a processed portion of the Zn-based plated steel sheet can be enhanced. In addition, the inorganic film preferably contains at least one or more of a V component, a P component, and a Co component as an antirust component. The antirust component of the inorganic film is preferably one or more of vanadium oxide, phosphoric acid, and Co nitrate. In addition, the thickness of the inorganic film is preferably more than 0 µm and 1.5 µm or less. In this case, the conductivity or adhesion of the chemical conversion coating film described above can be further enhanced.

The resin film preferably contains a resin, an antirust pigment, and a conductive pigment. Furthermore, the resin film preferably contains any one or more of metal particles, intermetallic compound particles, conductive oxide particles, and conductive non-oxide ceramic particles as the conductive pigment, and the conductive pigment preferably has a powder resistivity of 185 × 10⁻⁶ Ωcm or less at 25°C, and preferably contains any one or more selected from the group consisting of Zn, Si, Zr, V, Cr, Mo, Mn, Fe, and W as a constituent element. Furthermore, the resin film preferably contains the conductive pigment in a proportion of 1.0 mass% or more and 30 mass% or less. Furthermore, an average thickness of the resin film is preferably 1.0 µm or more and 15 µm or less. Furthermore, an average grain size of the conductive pigment is preferably 0.5 times or more and 1.5 times or less the average thickness of the resin film. When any one or more of these requirements are satisfied, outer surface corrosion resistance and cooling liquid corrosion resistance of the Zn-based plated steel sheet can be further enhanced.

Examples of the chemical conversion coating film include those listed in Japanese Patent No. 4776458, Japanese Patent No. 5336002, Japanese Patent No. 6191806, Japanese Patent No. 6263278, PCT International Publication No. WO2020/202461, and Japanese Patent No. 4084702. Therefore, the chemical conversion coating films listed in these publications can be suitably used as the chemical conversion coating film of the present embodiment.

The top portion of the bank part 112 of the press forming member 11 and the flow path upper lid 12 are joined by the joint portion 13. The joint portion 13 is made of a joining metal that brazes the base steel sheet of the press forming member 11 and the base steel sheet of the flow path upper lid 12. Since brazing is performed at a temperature equal to or lower than the base metal melting point unlike welding, the base steel sheet is not melted. When the cross section of the joint portion 13 is observed, the base steel sheet and the joining metal can be easily distinguished from each other.

Brazing does not melt the base steel sheet, but may damage the plating. Therefore, there is no report on an example in which a plated steel sheet and brazing are used in combination in the cooling structure 1 in which both cooling liquid corrosion resistance and outer surface corrosion resistance are required. However, the present inventors have found that by setting the film thickness of the Al-based plating or the Zn-based plating within the above range, plating damage in the flow path 14 can be suppressed, and the cooling liquid corrosion resistance can be further enhanced.

In addition, the joint portion 13 can be formed using only Al-based plating or Zn-based plating having the above-described film thickness. As described later, this is because the thick Al-based plating or Zn-based plating exerts the same function as the brazing material. Therefore, all of the joining metals forming the joint portion 13 may be the Al-based plating or the Zn-based plating. On the other hand, when the press forming member 11 and the flow path upper lid 12 are the Al-based plated steel sheets, for example, a brazing material such as Al-Si brazing may be additionally used. In addition, when the press forming member 11 and the flow path upper lid 12 are the Zn-based plated steel sheets, for example, a brazing material such as Zn-Si brazing material may be additionally used. In this case, a part of the joining metal forming the joint portion 13 is plating, and the rest is additional brazing material.

In general, brazing is understood to be joining performed by adding a filler metal between base metals. In the present embodiment, there is a case where a brazing material is not additionally applied, but the Al-based plating or the Zn-based plating is regarded as a filler metal added between base steel sheets, and the joint portion is regarded as a type of brazing portion. In general, the brazing material is understood to be a filler metal having a melting point of 450°C or higher. However, in the present embodiment, the Zn-Si brazing material or the Zn-based plating, which have a melting point of about 420°C, are also referred to as brazing material for convenience, and joining using the brazing material is referred to as brazing.

In the cooling structure according to the present embodiment, the interval between the partial flow paths 1411 in the parallel flow path portion 141, that is, the partial flow path interval s, and the width of the joint portion 13 in the parallel flow path portion 141, that is, a joining width B are individually defined. The partial flow path interval s means the width of a region in which the distance between the bank part 112 and the flow path upper lid 12 is less than 0.5 mm and which is located between the adjacent partial flow paths 1411 in the cross section of the parallel flow path portion 141 perpendicular to the first direction which is the extending direction of the partial flow path 1411. The joining width B means the width of the joining metal between the adjacent partial flow paths 1411 in the cross section of the parallel flow path portion 141 perpendicular to the first direction. Here, the "width" is the width measured along the second direction.

The reason why the partial flow path interval s is defined as described above is that ease of circulation of a cooling liquid is taken into consideration. In the cooling structure 1 according to the present embodiment, the flow path 14 and the partial flow path 1411 included in the flow path mean a space through which a cooling water easily flows and which exhibits a substantial cooling effect. If there is a slight gap between the press forming member 11 and the flow path upper lid 12, cooling water can enter the gap. However, in a case where the thickness of the gap is less than 0.5 mm, the gap does not exhibit a cooling effect and does not function as the flow path 14 and the partial flow path 1411. For the above reasons, in the present embodiment, a space between the flow path upper lid 12 and the press forming member 11, the space having a thickness of 0.5 mm or more along the direction perpendicular to the flow path upper lid 12, is regarded as the flow path 14 and the partial flow path 1411. The sum of the width of the joining metal region between the partial flow paths 1411, that is, the region where the gap is 0 mm, and the width of the space between the flow path upper lid 12 and the press forming member 11, the space having a thickness of less than 0.5 mm along the direction perpendicular to the flow path upper lid 12, is regarded as the interval between the partial flow paths 1411.

FIG. 1B is a schematic diagram illustrating the partial flow path interval s and the joining width B.

The left side of FIG. 1B illustrates a state in which the bank part having a partially circular cross section and the flow path upper lid are joined by the joining metal 131. Here, the interval between the bank part 112 and the flow path upper lid 12 at both end portions of the joining metal is slightly narrower than 0.5 mm. Therefore, both end portions of the joining width B do not coincide with both end portions of the partial flow path interval s.

The right side of FIG. 1B illustrates a state in which the bank part which has a rectangular cross section and of which a top portion forms a flat surface is joined to the flow path upper lid by the joining metal 131. Here, the joining metal 131 is disposed on the entire flat surface forming the top portion of the bank part. The interval between the bank part 112 and the flow path upper lid 12 at both end portions of the joining metal is 0.5 mm or more. Therefore, both end portions of the joining width B and both end portions of the partial flow path interval s coincide with each other.

The center of FIG. 1B illustrates a state in which the bank part which has a rectangular cross section and of which a top portion forms a flat surface is joined to the flow path upper lid by the joining metal 131. Here, the joining metal 131 is disposed only on a part of a flat surface forming the top portion of the bank part. Further, the interval between the bank part 112 and the flow path upper lid 12 at both end portions of the joining metal is less than 0.5 mm, and the interval between the bank part 112 and the flow path upper lid 12 at both end portions of the flat surface forming the top portion of the bank part is also less than 0.5 mm. Therefore, the joining width B is an interval between both end portions of the joining metal, but the end of the partial flow path interval s is located slightly outside both end portions of the flat surface forming the top portion of the bank part.

In order to enhance the cooling efficiency of the cooling structure 1, it is preferable to increase the contact area between the cooling liquid and the flow path upper lid 12, that is, to increase the area of the region facing the flow path 14 in the flow path upper lid 12. Therefore, the flow path 14 has a parallel flow path portion 141 in which a plurality of partial flow paths 1411 extending along the first direction are arranged in the second direction orthogonal to the first direction. The first direction is, for example, a longitudinal direction or a lateral direction of the cooling structure 1. By providing parallel flow path portions 141 in which a plurality of partial flow paths 1411 are arranged in parallel, it is possible to increase a contact area between the cooling liquid and the flow path upper lid 12. However, in order to ensure more excellent cooling efficiency, the present inventors have made further investigations.

As means for further increasing the contact area between the cooling liquid and the flow path upper lid 12, it has been considered to increase the width w of the partial flow path 1411. However, the larger the width w of the partial flow path 1411, the larger the stress applied to the joint portion 13, and the life of the cooling structure 1 may be reduced. In addition, when the width w of the partial flow path 1411 is too wide, the cooling liquid does not flow in the extending direction of the partial flow path 1411, that is, along the first direction, and there is a possibility that cooling unevenness occurs.

Another means for further increasing the contact area between the cooling liquid and flow path upper lid 12 is to narrow a partial flow path interval s. According to this means, it is possible to enhance cooling efficiency while preventing an increase in stress applied to the joint portion 13 and occurrence of cooling unevenness. For the above reason, in the cooling structure 1 according to the present embodiment, the partial flow path interval s, which is the interval between the adjacent partial flow paths 1411, is set to 20 mm or less in a part or all of the parallel flow path portion 141. The partial flow path interval s may be 18 mm or less, 16 mm or less, or 15 mm or less. The lower limit of the partial flow path interval s is not particularly limited, but the interval s may be 3 mm or more, 5 mm or more, or 8 mm or more from the viewpoint of preventing joining failure. The partial flow path interval s is preferably within the above-described range in the entire parallel flow path portion 141. However, for example, by disposing another component such as a screw hole between the partial flow paths 1411, the partial flow path interval s may be more than 20 mm in a part of the parallel flow path portion 141. In other words, the partial flow path interval s may be within the above-described range in a part of the parallel flow path portion 141.

On the other hand, in order to secure the strength and liquid tightness of the cooling structure 1, it is necessary to secure the joining strength of the brazing portion. Therefore, in a part or all of the parallel flow path portion 141, the lower limit of the joining width B, which is the width of the joining metal disposed in the brazing portion, is set to 3 mm or more. The lower limit of the joining width B may be 5 mm or more, or 8 mm or more. The upper limit of the joining width B is not particularly limited, but it is desirable to set the upper limit to 20 mm in consideration of the definition of the partial flow path interval s described above. The joining width B may be 18 mm or less, 16 mm or less, or 15 mm or less. In order to prevent the cooling water from leaking to the outside of the cooling structure 1, the joining width B may be set within the above range also in the outer circumferential portion of the cooling structure 1. That is, not only between the partial flow paths 1411, but also between the flow path forming the partial flow path 1411 or the flow path connecting portion 142 and the end portion of the press forming member 11, or between the flow path forming the partial flow path 1411 or the flow path connecting portion 142 and the end portion of the flow path upper lid 12, the joining width B may have the above-described value. In addition, similarly to the partial flow path interval s, the joining width B may be set within the above range in a part or all of the parallel flow path portion 141.

As illustrated in FIG. 1B, the partial flow path interval s and the joining width B do not necessarily coincide with each other. The partial flow path interval s and the joining width B can be estimated to some extent based on the cross-sectional shape and the like of the bank part 112. However, in order to accurately measure the partial flow path interval s and the joining width B, it is desirable to cut the brazing cooling structure 1 and observe the cross section thereof.

The width w of the partial flow path 1411 is not particularly limited as long as the partial flow path interval s and the joining width B are within the above ranges. From the viewpoint of further increasing the contact area between the flow path forming portion and the flow path upper lid 12, the width w of the partial flow path 1411 may be 6 mm or more, 8 mm or more, or 10 mm or more. Meanwhile, the width w of the partial flow path 1411 may be set to 30 mm or less, 25 mm or less, or 20 mm or less from the viewpoint of further enhancing the joining strength between the press forming member 11 and the flow path upper lid 12 and further enhancing the uniformity of cooling.

The width w of the partial flow path 1411 is an interval between both end portions of the partial flow path 1411 measured along the second direction. At this time, the end portion of the partial flow path 1411 is an end portion of a region where an interval between the bank part 112 and the flow path upper lid 12 is 0.5 mm or more when the cooling structure 1 is viewed in a plane view in a direction perpendicular to the flow path upper lid 12.

As illustrated in FIG. 2A, the flow path connecting portion 142 that communicates the plurality of partial flow paths 1411 may be further provided in the flow path 14. In addition, the cooling liquid inlet 143 and the cooling liquid outlet 144 for introducing a cooling liquid into the flow path may be further provided in the flow path 14. In a case where the flow path 14 has the flow path connecting portion 142, the flow path 14 forms one space. In this case, one cooling liquid inlet 143 and one cooling liquid outlet 144 may be provided in the cooling structure 1. On the other hand, the flow path connecting portion 142 may not be provided in the cooling structure 1. In this case, the cooling liquid inlet 143 and the cooling liquid outlet 144 may be provided in each of the plurality of partial flow paths 1411. Only a part of the plurality of partial flow paths 1411 may be communicated by the flow path connecting portion 142, and the flow path 14 may form two or more spaces.

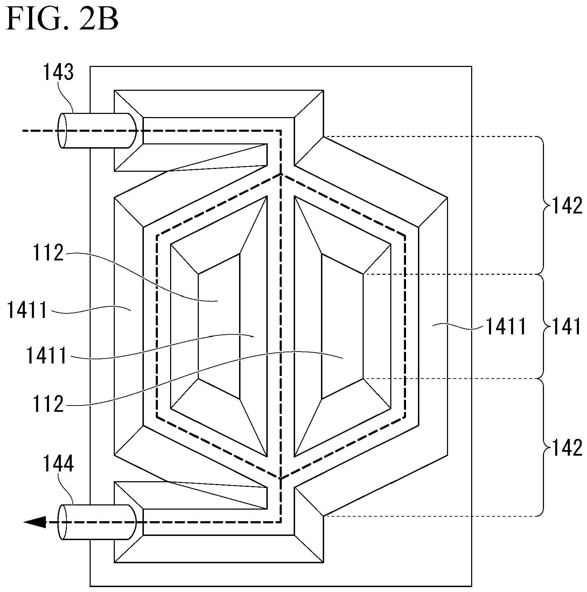

In FIG. 2A and the like, each of the two flow path connecting portions 142 is one straight flow path, and the flow path connecting portion 142 communicates with all the partial flow paths 1411 to be orthogonal thereto. However, the shape of the flow path connecting portion 142 and the arrangement of the flow path connecting portion 142 and the partial flow path 1411 are not limited thereto. For example, the angle formed by the flow path connecting portion 142 and the partial flow path 1141 is not limited to 90°, and can be appropriately selected according to the use of the cooling structure 1. The flow path connecting portion 142 may have a branch structure. As shown in FIG. 2B, the two flow path connecting portions 142 may be branched in a fan shape starting from the cooling liquid inlet 143 or the cooling liquid outlet 144, and communicate with each of the partial flow paths 1411 at various angles at the branch destination.

From the viewpoint of further improving the outer surface corrosion resistance of the cooling structure 1, the plating damage proportion on the outer surface of the cooling structure 1 is preferably 20% or less, 18% or less, 15% or less, or 10% or less. The plating damage proportion refers to a portion where the base steel sheet is exposed due to plating damage, a portion where the constraining jig comes into contact with the plating surface in a state of plating melting at the time of brazing and irregularities are generated on the plating surface, and a portion where the plating is remelted by additional joining such as spot welding or laser welding and irregularities are generated on the plating surface. If the plating is re-solidified while maintaining a uniform surface shape even if the plating is melted, the corrosion resistance is not deteriorated. However, if irregularities are generated at the time of re-melting the plating, unevenness of the plating thickness occurs, and thus corrosion resistance is deteriorated. Since the uneven plating can be easily determined by external appearance observation, the area of the uneven portion can be measured from an image obtained by photographing or the like. Furthermore, it is preferable that the steel sheet is not exposed on the outer surface of the cooling structure 1. That is, it is preferable that the entire outer surface of the cooling structure 1 is covered with Al-based plating or Zn-based plating.

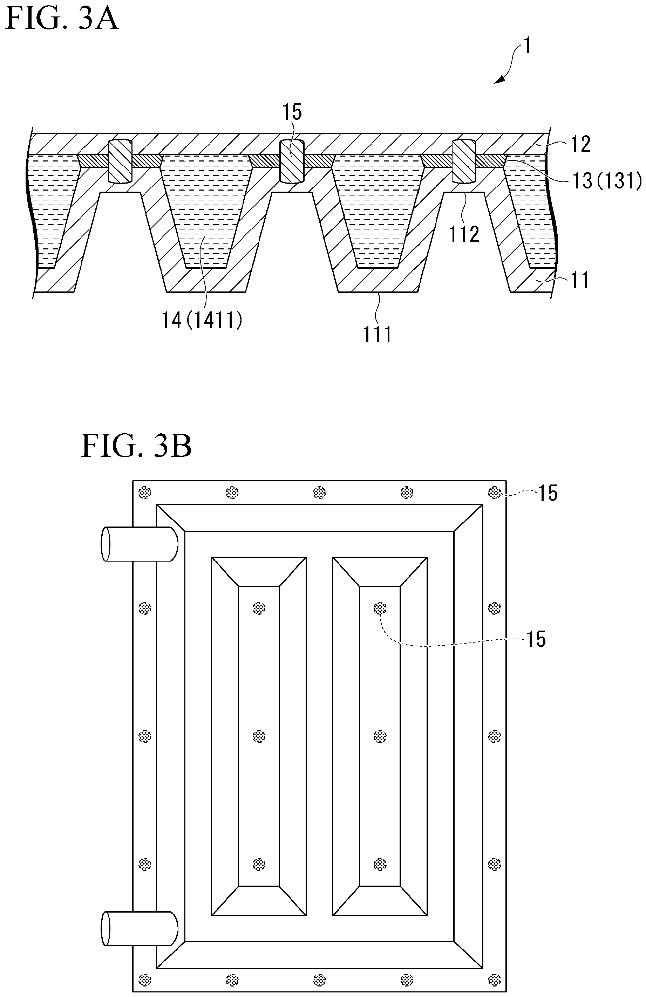

As illustrated in FIGS. 3A and 3B, the cooling structure 1 may include, at a part of the joint portion 13, one or more additional joints 15 selected from the group including a spot weld, a projection weld, a laser weld, and a caulked joint.

The additional joint 15 is mainly used for improving the efficiency of the brazing. As will be described later, the brazing is performed by superposing and fixing the flow path upper lid 12 and the press forming member 11, and then heating the brazing material. The flow path upper lid 12 and the press forming member 11 are usually grasped by being held using a fixing jig. However, by grasping the flow path upper lid 12 and the press forming member 11 with the fixing jig, the plating formed on the surfaces of the flow path upper lid 12 and the press forming member 11 is damaged, or the plating is damaged to expose the base steel sheet. On the other hand, by providing the additional joint 15 before the brazing and fixing the flow path upper lid 12 and the press forming member 11 using the additional joint, it is possible to reduce the plating damage proportion of the outer surface of the cooling structure 1 and to prevent the base steel sheet from being exposed on the outer surface of the cooling structure 1. In a case where the plated steel sheet is welded, the plating may be damaged, but in a case where brazing is performed after welding, the brazing material flows to cover the plating damaged portion. Therefore, corrosion resistance of the additional joint 15 is less deteriorated. Further, when the additional joint 15 is provided, strain is generated in the flow path upper lid 12 and the press forming member 11, and the dimensional accuracy may be slightly deteriorated. However, in a case where the dimension of the cooling structure 1 is large, for example, in a case where the application of the cooling structure 1 is cooling of a battery of an EV, a decrease in dimensional accuracy due to the additional joint 15 can be ignored.

The shape in a plane view of the press forming member 11 and the flow path upper lid 12 forming the cooling surface of the cooling structure 1 is not particularly limited. For example, in a case where the use of the cooling structure 1 is cooling of a battery of an EV, the plane view shape of the flow path upper lid 12 is desirably rectangular. In this case, the size of the flow path upper lid 12 in a plane view is preferably 1000 mm to 2300 mm in the longitudinal direction and 200 mm to 1500 mm in the lateral direction. Similarly, the size of the press forming member 11 in a plane view is preferably 1000 mm to 2300 mm in the longitudinal direction and 200 mm to 1500 mm in the lateral direction. When the cooling structure 1 in which the press forming member 11 and/or the flow path upper lid 12 has a large area and the partial flow path interval s is narrow is manufactured, a joining failure between the bank part 112 and the flow path upper lid 12 tends to be a problem. However, for example, according to a manufacturing method described later, a joining failure can be easily avoided.

The size of the flow path upper lid 12 in the longitudinal direction in a plane view may be 1200 mm or more, 1400 mm or more, or 1600 mm or more. The size of the flow path upper lid 12 in the longitudinal direction in a plane view may be 2200 mm or less, 2000 mm or less, or 1800 mm or less. The size of the flow path upper lid 12 in the lateral direction in a plane view may be 250 mm or more, 500 mm or more, or 700 mm or more. The size of the flow path upper lid 12 in the lateral direction in a plane view may be 1400 mm or less, 1300 mm or less, or 1200 mm or less.

The size of the press forming member 11 in the longitudinal direction in a plane view may be 1200 mm or more, 1400 mm or more, or 1600 mm or more. The size of the press forming member 11 in the longitudinal direction in a plane view may be 2200 mm or less, 2000 mm or less, or 1800 mm or less. The size of the press forming member 11 in the lateral direction in a plane view may be 250 mm or more, 500 mm or more, or 700 mm or more. The size of the press forming member 11 in the lateral direction in a plane view may be 1400 mm or less, 1300 mm or less, or 1200 mm or less.

As described above, in the cooling structure according to the first embodiment, the press forming member 11 and the flow path upper lid 12 are made of the Al-based plated steel sheet or the Zn-based plated steel sheet having a predetermined film thickness, and by brazing joining the press forming member 11 and the flow path upper lid 12 to each other, it is possible to enhance the cooling liquid corrosion resistance and the outer surface corrosion resistance. As a result, it is possible to suppress flow path corrosion and to suppress occurrence of contamination that causes a decrease in thermal conductivity and clogging. Furthermore, outer surface corrosion can be suppressed, and the life of the cooling structure 1 can be extended.

Further, in the cooling structure according to the first embodiment, by setting the partial flow path interval s in the parallel flow path portions 141 to 20 mm or less, it is possible to increase the contact area between the cooling liquid and the flow path upper lid 12 and to improve the cooling efficiency.

In addition, in the cooling structure according to the first embodiment, the joining width B is set to 3 mm or more, the sheet thickness of the plated steel sheet forming the press forming member 11 is set to 1.2 mm or less, and the Al-based plating or the Zn plating is thickness-plated, so that brazing failure can be suppressed, and the liquid tightness of the flow path 14 can be enhanced.

### (2. Battery unit)

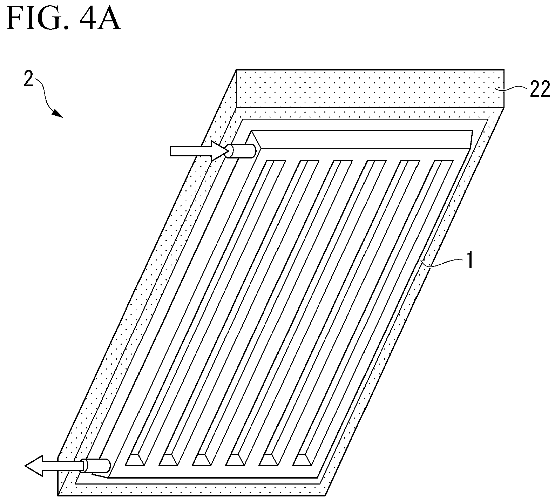

Next, a battery unit according to a second embodiment of the present invention will be described. As illustrated in FIGS. 4A to 4C, the battery unit 2 according to the present embodiment includes a battery cell 21, a battery pack 22 in which the battery cell 21 is housed, and the cooling structure 1 according to the first embodiment.

When the cooling structure 1 is incorporated into the battery unit 2, as shown in FIG. 4B, the battery pack 22 can be used as the flow path upper lid 12 of the cooling structure 1. In other words, the top portion of the bank part 112 of the press forming member 11 can be brazed to the battery pack 22. By integrating the battery pack 22 and the cooling structure 1, the battery unit 2 can extremely efficiently cool the battery cell 21.

On the other hand, a structure in which the battery pack 22 and the cooling structure 1 are separated may be adopted. For example, the battery unit 2 may be manufactured by joining the flow path upper lid 12 and the battery pack 22. In this case, as illustrated in FIG. 4C, a gap filler 23 may be disposed between the flow path upper lid 12 and the battery pack 22. For some reason (dimensional accuracy error, complicated irregularity shape formed in the battery pack 22, and the like), it may be difficult to join the battery pack 22 and the flow path upper lid 12 of the cooling structure 1 without a gap. In such a case, the gap filler 23 can be used. The gap filler 23 is generally a resin containing a pigment having high thermal conductivity. By inserting the gap filler 23 between different substances, heat exchange efficiency can be improved. In the present embodiment, the thermal conductivity of the gap filler 23 is preferably 3.5 W/m or more. An example of the gap filler 23 is "SDP-3540-A" manufactured by Shin-Etsu Chemical Co., Ltd. The thickness of the gap filler is preferably 0.1 mm to 8.0 mm, and more preferably 0.5 mm to 3.0 mm.

The configuration of the battery pack 22 is not particularly limited. For example, the battery pack 22 may have a substantially rectangular shape, and the cooling structure 1 may be disposed on the bottom surface portion thereof, or the bottom surface portion thereof may be used as the flow path upper lid 12 of the cooling structure 1. In addition, from the viewpoint of improving corrosion resistance, the steel sheet forming the battery pack 22 is preferably an Al-based plated steel sheet or a Zn-based plated steel sheet. However, in a case where a structure in which the battery pack 22 and the cooling structure 1 are separated as illustrated in FIG. 4C is adopted, it is not essential to impart cooling liquid corrosion resistance to a portion of the battery pack 22 to which the cooling structure 1 is attached, for example, a bottom surface portion.

The thickness of the Zn-based plated steel sheet or the Al-based plated steel sheet forming the bottom surface portion of the battery pack 22 is not particularly limited, but is, for example, preferably 0.3 to 1.2 mm, and more preferably 0.4 to 0.6 mm. In this case, the bottom surface portion can be formed thin while maintaining a strength of the bottom surface portion of the battery pack 22. Therefore, since the distance between a cooling liquid and an internal structure of the battery pack 22 can be narrowed, cooling efficiency of the battery pack 22 can be enhanced, and cooling responsiveness of the battery pack 22 can be enhanced.

Materials of the side surface portion and the upper surface portion of the battery pack 22 are not particularly limited, but these are also preferably made of the same Zn-based plated steel sheet or Al-based plated steel sheet as the bottom surface portion. In particular, since the side surface portion is exposed to an external environment, the side surface portion is preferably formed of the Zn-based plated steel sheet or the Al-based plated steel sheet similar to the bottom surface portion. Note that the upper surface portion and the side surface portion may be joined via a sealer. When the battery unit 2 is used as a power source of the EV, the upper surface portion of the battery pack 22 is preferably fixed to the bottom surface portion of the vehicle.

### (3. Manufacturing method of cooling structure)

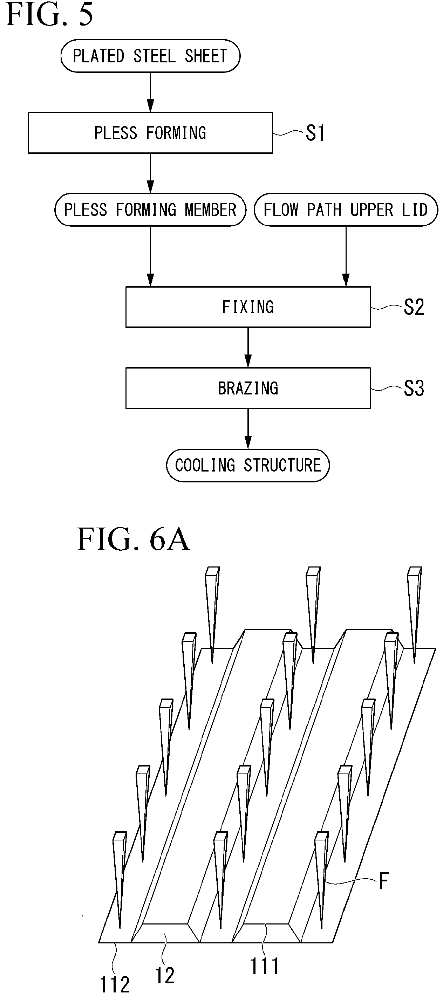

Next, a manufacturing method of a cooling structure according to a third embodiment of the present invention will be described. As illustrated in FIG. 5, the manufacturing method of a cooling structure according to the third embodiment includes press-forming (S1) a plated steel sheet to obtain a press forming member 11, fixing (S2) the press forming member 11 and the flow path upper lid 12, and brazing (S3) the press forming member and the flow path upper lid. Details of these steps will be described below. According to this manufacturing method, the cooling structure according to the first embodiment can be suitably manufactured. However, the following description does not limit the manufacturing method of the cooling structure according to the first embodiment.

### (S1 Press forming)

In the manufacturing method of the cooling structure according to the present embodiment, first, a plated steel sheet is press-formed. As a result, the press forming member 11 having the groove part 111 and the bank part 112 provided around the groove part 111 is obtained. The plated steel sheet to be subjected to press forming has a sheet thickness of 0.3 mm to 1.2 mm, and has the Al-based plating having a film thickness of 10.0 µm or more or the Zn-based plating having a film thickness of 5.0 µm or more. In the cooling structure 1 finally obtained, the flow path 14 includes the parallel flow path portion 141 in which the plurality of partial flow paths 1411 extending along the first direction are arranged in the second direction orthogonal to the first direction. In the parallel flow path portion 141, the partial flow path interval s, which is the interval between the adjacent partial flow paths 1411, is set to 20 mm or less, and the joining width B is set to 3 mm or more. It is necessary to form the groove part 111 in press forming by which the above-described shape of the flow path 14 is archived.

### (S2 Fixing)

Next, the flow path upper lid 12, which is a flat sheet, is overlapped at a position covering the groove part 111 of the press forming member 11, and both are fixed. Before the flow path upper lid 12 and the press forming member 11 are overlapped with each other, an additional brazing material may be disposed therebetween. Disposing the additional brazing material will be described later.

A method for fixing the superposed flow path upper lid 12 and the press forming member 11 is not particularly limited. The most common method of brazing is to grasp flow path upper lid 12 and press forming member 11 using a fixing jig. However, in a case where the flow path upper lid 12 is large and the partial flow path interval s is small, the number of brazed portions is extremely large. Therefore, it is necessary to bring all brazed portions into close contact with each other without any gap. Such treatment is difficult depending on a conventional fixing jig.

It is conceivable to use a high rigidity jig such as a die as one of means for bringing all brazed portions into close contact without any gap. By using a die having a shape along the outer surface of the press forming member 11, the entire bank part 112 of the press forming member 11 can be pressed against and brought into close contact with the flow path upper lid 12. However, when such a die is used, there is a possibility that plating disposed on the outer surface of the cooling structure 1 is damaged. In this case, the plating damage proportion on the outer surface of the cooling structure 1 increases, or the steel sheet is exposed on the outer surface, so that the outer surface corrosion resistance of the cooling structure 1 may be impaired.

In order to avoid plating damage, it is preferable to reduce the contact area between the fixing jig that pressurizing the top portion of the bank part 112 against the flow path upper lid 12 and the outer surface of the cooling structure 1 as much as possible. Specifically, the area of the contact section between the fixing jig F for fixing the flow path upper lid 12 and the press forming member 11 and the top portion of the bank part 112 is preferably 30% or less of the area of the flat surface forming the top portion of the bank part 112 on the outer surface of the cooling structure 1. Here, the area of the flat surface forming the top portion of the bank part 112 means the total area of the plane corresponding to the top portion when the top portion of the bank part 112 is a plane as illustrated in FIG. 1A.

As a specific means for reducing the contact area, for example, the bank part 112 of the press forming member 11 may be pressed against and fixed to the flow path upper lid 12 using a fixing jig F having a base portion and a protrusion portion, a tip of the protrusion portion being on substantially the same plane, a position of the protrusion portion corresponding to the bank part 112 of the press forming member 11, and the distance between the tip of the protrusion portion and the base portion being sufficiently larger than the depth of the groove part 111 of the press forming member 11.

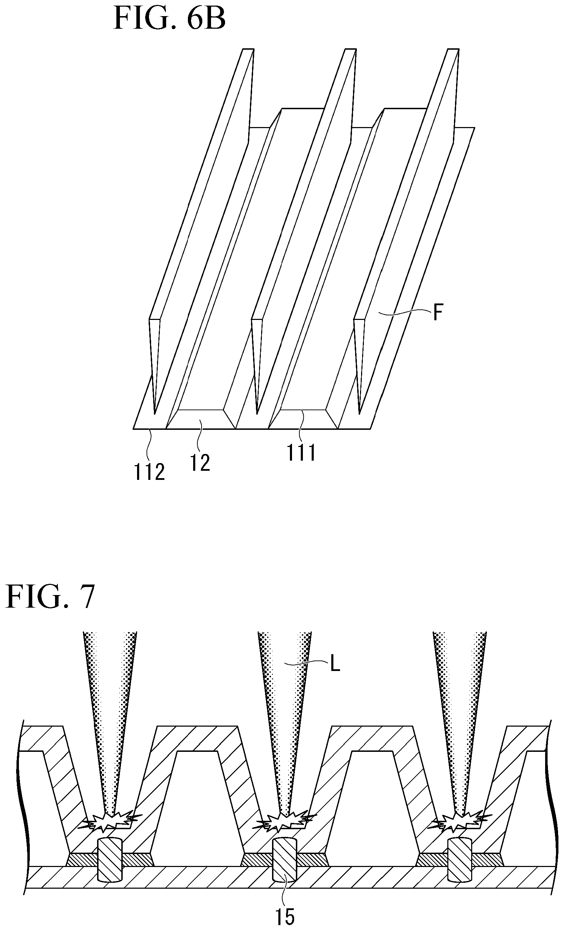

An example of the fixing jig F is illustrated in FIGS. 6A and 6B. In these drawings, the description of the base portion of the fixing jig F is omitted, and only the protrusion portion is described. The fixing jig F illustrated in FIG. 6A has a plurality of rod-shaped protrusion portions, the tips of the protrusion portions are on substantially the same plane, and the position of the protrusion portion corresponds to the bank part 112. The fixing jig F illustrated in FIG. 6B has the same configuration as that of FIG. 6A except that the protrusion portion has a plate shape instead of a rod shape. By pressing and fixing the press forming member 11 against the flow path upper lid 12 using such a fixing jig F, it is possible to suppress joining failure. The protrusion portion has a sufficient length. Therefore, when the press forming member 11 is pressed against the flow path upper lid 12, the protrusion portion prevents the base portion of the fixing jig F from coming into contact with the press forming member 11, thereby minimizing damage to the plating disposed on the outer surface of the flow path upper lid 12.

In order to bring the bank part 112 of the press forming member 11 into close contact with the flow path upper lid 12, the above-described additional joint 15 may be formed instead of using the fixing jig F. Specifically, before forming the joint portion 13, the top portion of the bank part 112 and a part of the flow path upper lid 12 may be joined by one or more kinds of joining means selected from the group including spot welding, projection welding, laser welding, and caulked joining, thereby fixing the flow path upper lid 12 and the press forming member 11. That is, brazing may be performed after the bank part 112 and the flow path upper lid 12 are temporarily fixed by the additional joint 15. When the additional joint 15 is formed by welding, it is preferable to minimize weld input heat. Since the object of forming the additional joint 15 is temporary fixing, it is not necessary to secure the penetration depth by increasing the weld input heat. In addition, by minimizing the weld input heat, it is possible to avoid plating damage around the weld. However, even if slight plating damage occurs due to welding, the brazing material flows and covers the plating damaged portion at the time of subsequent brazing, so that the influence of welding on corrosion resistance is extremely small.

The method using the fixing jig F as illustrated in FIGS. 6A and 6B is excellent in that the method can be easily performed in a short time. However, the shape of the fixing jig F is complicated, and the position of the protrusion portion needs to correspond to the shape of the flow path 14. Every time the shape of the flow path 14 is changed, it is necessary to manufacture a fixing jig F conforming thereto. Therefore, the method using the fixing jig F has poor production flexibility. On the other hand, the method using the additional joint 15 is excellent in that the degree of freedom in production is high. However, according to the method using the additional joint 15, it takes a relatively long time to fix the flow path upper lid 12 and the press forming member 11. In addition, when the width of the bank part 112 is designed so that the partial flow path interval s becomes extremely narrow, there is a possibility that joining means such as a welding electrode cannot be inserted up to the top portion of the bank part 112. It is preferable to select an appropriate fixing means while considering the shape, application, manufacturing environment, the number of products, and the like of the cooling structure 1.

### (S3 Brazing)

After fixing the flow path upper lid 12 and the press forming member 11, the brazing material disposed between the flow path upper lid 12 and the top portion of the bank part 112 of the press forming member 11 is heated. As a result, the brazing material is melted and solidified to obtain the joint portion 13 that joins the flow path upper lid 12 and the top portion.

Means for disposing the brazing material is not particularly limited. For example, when all the brazing material in the joint portion 13 is made of the Al-based plating or the Zn-based plating, disposing the brazing material is unnecessary. This is because the Al-based plating or the Zn-based plating provided on the surface of the base steel sheet serves as a brazing material disposed between the base steel sheet and the top portion of the bank part 112 of the press forming member 11.

On the other hand, for the object of more reliably preventing leakage of the cooling liquid, a brazing material may be additionally applied before the flow path upper lid 12 and the press forming member 11 are overlapped. The additional brazing material may be applied to the top portion of the bank part 112 of the press forming member 11 and/or a region of the flow path upper lid 12 joined to the top portion. When the press forming member 11 and the flow path upper lid 12 are the Al-based plated steel sheets, a brazing material having high affinity with the Al-based plating, such as Al-Si brazing material, may be applied. When the press forming member 11 and the flow path upper lid 12 are Zn-based plated steel sheets, a brazing material having high affinity with the Zn-based plating, such as the Zn-Si brazing material, may be applied.

Means for heating the brazing material is not particularly limited. The most common heating means is a heating furnace. By charging the fixed flow path upper lid 12 and the press forming member 11 into the heating furnace and raising the temperature of the heating furnace, the entire member including the brazing material can be uniformly heated. However, in a case where the flow path upper lid 12 and the press forming member 11 are large, it is necessary to use a large heating furnace, and the manufacturing cost increases.

As another means for heating the brazing material, a heat source capable of local heating such as a laser can also be used. For example, as illustrated in FIG. 7, by irradiating the brazing material disposed between the flow path upper lid 12 and the press forming member 11 with the laser L, the brazing material melts due to a temperature rise of a steel sheet or the like in the vicinity of the brazing material, and the flow path upper lid 12 and the press forming member 11 can be joined. If no additional brazing material is applied, the laser L may be used to melt the plating and braze. Unlike laser welding in which the base metal is locally melted, in laser irradiation for brazing, it is preferable to set the laser beam diameter to be wide so as not to melt the base material. Furthermore, at the time of laser irradiation, the outer surface corrosion resistance of the cooling structure 1 can be further improved by irradiating the cooling structure 1 with a laser at an output that does not damage the outside of the cooling structure 1. When brazing is performed using the laser L, it is preferable to fix the member using the additional joint 15. When the fixing jig F illustrated in FIGS. 6A and 6B is used, the protrusion portion of the fixing jig F may interfere with the irradiation of the laser L.

### [Examples]

The effect of one aspect of the present invention will be described more specifically with reference to examples. However, the conditions in the examples are merely one condition example adopted to confirm the operability and effects of the present invention. The present invention is not limited to this one condition example.

The present invention can adopt various conditions as long as the object of the present invention is achieved without departing from the scope of the present invention as defined in the appended claims.

A press forming member and a flow path upper lid were manufactured using the steel sheets shown in Table 1. These components were joined under the joining conditions shown in Table 1 to obtain the cooling structures of Invention Examples A1 to A10 and the cooling structures of Comparative Examples B1 to B3. The widths of the partial flow paths and the partial flow path intervals in the parallel flow path portions of these cooling structures were measured and shown in Table 1. The width of the partial flow path and the interval between the partial flow paths were measured by cutting the parallel flow path portion of each cooling structure along a plane perpendicular to the first direction and observing the cut surface. The average value of the measured values of the width of the partial flow path and the partial flow path interval at randomly selected five points was filled in Table 1.

Further, these cooling structures were evaluated for liquid tightness, cooling liquid corrosion resistance, and outer surface corrosion resistance, and the results are shown in Table 2. In any of the examples, the width of the partial flow path in the parallel flow path portion is 20 mm or less. Therefore, a contact area between the flow path upper lid and the cooling liquid is sufficiently secured, and high cooling efficiency is achieved.

Each of the steel sheets described in Table 1 had a tensile strength of 270 MPa class. In the same example, the steel sheet of the press forming member and the steel sheet of the flow path upper lid were the same.

Regarding Examples described as "Plating utilization" in the section of "Brazing material" in Table 1, no additional brazing material was applied, and only plating was used as a brazing material. For other examples, a brazing material of the type described in the section of "Brazing material" was applied before brazing. In addition, regarding the example in which the additional brazing material was applied, the application position was described in the section of "Brazing material use position".

In the manufacture of the example described as the "Jig pressing flange at a point" in the section of "Fixing method of joint portion" in Table 1, a fixing jig having a rod-shaped protrusion portion as illustrated in FIG. 6A was used to fix the press forming member and the flow path upper lid. When manufacturing of the example described as "Entire surface pressing", a stationary die that presses the entire press forming member was used as a fixing jig. In the manufacture of other examples, an additional joint was formed by means described in the section of "Fixing method of joint portion" without using a fixing jig.

In the section of "Heating method" of Table 1, the heating method for brazing is described.

In the section of "Shape" in Table 1, the cross-sectional shape of the press forming member is shown. The press forming member of example described as "Rectangle" had a bent shape as illustrated in FIG. 1A and the like. The press forming member of example described as "Corrugated shape" had a shape in which partial circles were connected as illustrated in the lower part and the like of FIG. 4B.

"Water leakage evaluation" described in Table 2 was evaluated by the following procedure. An LLC at 50°C was circulated through the flow path of each example at 1.5 atm. At this time, it was visually confirmed whether there was no LLC leakage from the cooling structure to the outside. The surface temperature of the cooled structure was measured with a radiation thermometer. If LLC leakage occurs between the flow paths, the temperature of the flow paths does not reach 50°C, which is the LLC temperature. For the example in which a leak occurred, "C" was described in the section "Leakage in LLC circulation test", and "A" was written for the other examples. In examples in which the flow path temperature did not rise to 50°C, "C" was described in the section of "Temperature measurement of flow path", and "A" was written for other examples. Further, the member was disassembled after the water leakage test, and the joining width was measured by cross-section observation. Note that, as the joining width described in Table 2, the minimum joining width at the time of randomly observing the cross section of five water flow paths is described.

In addition, after the LLC was circulated under the above-described conditions, whether or not rust was mixed in the LLC was confirmed. When the LLC is circulated in a cooling structure in which cooling liquid corrosion resistance is insufficient, the LLC turns red due to rust. In the examples in which rust was mixed into the LLC, "C" was described in the section of "Liquid deterioration in LLC circulation test", and "A" was written in other examples.

The "Plating damage proportion" described in Table 2 was evaluated by visually inspecting a portion where irregularities were generated in plating from an external appearance photograph of an evaluation member. The ratio of the area of the plating damaged portion to the area of the bank part (portion corresponding to the interval between the partial flow paths) to be the brazed portion was defined as a plating damage proportion. In addition, the combined cycle test was performed for each example, and the results thereof are described in the section of "CCT corrosion test" in Table 2. The conditions of the combined cycle test were in accordance with the JASO standard, and 180 cycles were performed with salt water spraying for 2 hours, drying for 4 hours, and wetting for 2 hours as 1 cycle. The sample in which both red rust and white rust were not generated at the time of 180 cycles was described as "A" in the section of "CCT corrosion test", the sample in which red rust was not generated but white rust was generated was described as "B" in the section of "CCT corrosion test", and the sample in which red rust was generated was described as "C" in the section of "CCT corrosion test". Samples determined as "A" or "B" were determined to be excellent in outer surface corrosion resistance. In the sample in which red rust has occurred, it is considered that corrosion has reached the base steel sheet. On the other hand, in the sample in which red rust is not generated, even if white rust is generated, corrosion does not reach the base steel sheet, and it is considered that necessary outer surface corrosion resistance is secured.

**[Table 1]**

| | Applied steel sheet | | | Flow path shape | | | Joining specification | | | |
|---|---|---|---|---|---|---|---|---|---|---|
| | Sheet thickness (mm) | Plating type | Plating thickness (µm) | Shape | Partial flow path width /w (mm) | Partial flow path interval /s (mm) | Brazing material | Brazing material use position | Fixing method of brazing portion | Heating method |
| A1 | 0.6 | Al plating | 11 | Rectangle | 28.4 | 14.2 | Al-Si brazing material | Only outer periphery | Jig pressing flange at a point | Furnace heating |
| A2 | 0.6 | Al plating | 10 | Corrugated shape | 17.1 | 3.4 | Al-Si brazing material | Only between flow paths | Jig pressing flange at a point | Furnace heating |
| A3 | 0.5 | Zn plating | 6 | Rectangle | 28.3 | 14.5 | Plating utilization | --- | Jig pressing flange at a point | Furnace heating |
| A4 | 0.5 | Zn plating | 12 | Corrugated shape | 16.5 | 3.5 | Zn-Al brazing material | Only between flow paths | Jig pressing flange at a point | Furnace heating |
| A5 | 0.6 | Al plating | 11 | Rectangle | 22.2 | 9.7 | Plating utilization | --- | Projection welding | Furnace heating |
| A6 | 0.6 | Al plating | 18 | Corrugated shape | 12.9 | 3.2 | Plating utilization | --- | Laser welding | Laser heating |
| A7 | 0.6 | Al plating | 10 | Rectangle | 28.1 | 14.3 | Plating utilization | --- | Swaging joining | Furnace heating |
| A8 | 0.6 | Al plating | 10 | Rectangle | 23.4 | 9.4 | Plating utilization | --- | Projection welding | Laser heating |
| A9 | 0.5 | Zn plating | 7 | Corrugated shape | 17.3 | 3.3 | Plating utilization | --- | Jig pressing flange at a point | Furnace heating |
| A10 | 0.8 | Zn plating | 7 | Rectangle | 28.1 | 14.3 | Al-Si brazing material | Between flow paths, outer periphery | Entire surface pressing | Furnace heating |
| B1 | 0.2 | Al plating | 12 | Rectangle | 28.3 | 14.2 | Joining is not performed | | | |
| B2 | 0.6 | Al plating | 7 | Rectangle | 23.6 | 9.7 | Plating utilization | --- | Projection welding | Furnace heating |
| B3 | 1.4 | Zn plating | 12 | Rectangle | 28.4 | 14.5 | Zn-Al brazing material | Only outer periphery | Jig pressing flange at a point | Furnace heating |

**[Table 2]**

| | Water leakage evaluation | | Inner surface corrosion resistance | | Outer surface corrosion resistance | |
|---|---|---|---|---|---|---|
| | Joining width /B (mm) | Leakage in LLC circulation test | Temperature measurement of flow path | Liquid deterioration in LLC circulation test | Plating damage proportion | CCT corrosion test |
| A1 | 15.6 | A | A | A | 12% | A |
| A2 | 4.2 | A | A | A | 13% | A |
| A3 | 12.4 | A | A | A | 13% | A |
| A4 | 3.6 | A | A | A | 11% | A |
| A5 | 10.2 | A | A | A | 2% | A |
| A6 | 4.1 | A | A | A | 7% | A |
| A7 | 15.1 | A | A | A | 0% | A |
| A8 | 10.2 | A | A | A | 3% | A |
| A9 | 3.7 | A | A | A | 14% | A |
| A10 | 15.3 | A | A | A | 78% | B |
| B1 | Joining is not performed | | | | | |
| B2 | 0.8 | C | C | C | 2% | C |
| B3 | 0 | A | C | A | 11% | A |

In Invention Examples A1 to A10, the sheet thickness and the plating thickness of the steel sheet were within appropriate ranges. Therefore, the cooling structures of Invention Examples A1 to A10 were excellent in the liquid tightness of the flow path, the corrosion resistance of the cooling liquid, and the corrosion resistance of the outer surface. In the CCT corrosion test of A10, red rust was not generated, but white rust was generated. This is presumed to be because many plating damages were generated on the outer surface of the cooling structure by the fixing jig. On the other hand, in Invention Examples A1 to A9 in which the contact area between the member and the jig was reduced at the time of brazing, the generation of white rust was also suppressed, and higher outer surface corrosion resistance could be realized.

In Comparative Example B1, the sheet thickness of the steel sheet was insufficient. Therefore, cracks occur during press forming, and a cooling structure cannot be created.

In Comparative Example B2, the film thickness of the Al-based plating was insufficient, and an additional brazing material was not applied. Therefore, in Comparative Example B2, a sound joint portion could not be formed over the entire flow path, and the liquid tightness of the flow path could not be secured. Furthermore, in Comparative Example B2, cooling water corrosion resistance and outer surface corrosion resistance could not be secured.

In Comparative Example B3, the sheet thickness of the steel sheet was excessive. Therefore, when the flow path upper lid and the press forming member are overlapped and fixed, the bank part and the flow path upper lid cannot be brought into close contact with each other as a whole, and the liquid tightness of the flow path cannot be secured.

### [Brief Description of the Reference Symbols]

1 Cooling structure
11 Press forming member
111 Groove part
112 Bank part
12 Flow path upper lid
13 Joint portion
131 Joining metal
14 Flow path
141 Parallel flow path portion
1411 Partial flow path
142 Flow path connecting portion
143 Cooling liquid inlet
144 Cooling liquid outlet
15 Additional joint
2 Battery unit
21 Battery cell
22 Battery pack
23 Gap filler
F Fixing jig
L Laser
s Interval between flow paths
w Width of flow path

## Claims

1. A cooling structure comprising:
a press forming member having a groove part and a bank part provided around the groove part;
a flow path upper lid which is a flat sheet overlapped at a position covering the groove part of the press forming member and forms a flat cooling surface; and
a joint portion which joins opposing surfaces of the flow path upper lid and the bank part to form a flow path through which a cooling liquid is capable of flowing,
wherein
the press forming member and the flow path upper lid are plated steel sheets having a base steel sheet,
the joint portion is made of a joining metal which brazes the base steel sheets of the press forming member and the flow path upper lid to each other,
the flow path includes a parallel flow path portion in which a plurality of partial flow paths extending along a first direction are arranged in a second direction orthogonal to the first direction, and **characterized in that** the plated steel sheets have an Al-based plating having a film thickness of 10.0 µm or more, or a Zn-based plating having a film thickness of 5.0 µm or more, in which a sheet thickness of the plated steel sheets is 0.3 mm to 1.2 mm, and
in a cross section of the parallel flow path portions perpendicular to the first direction, when a width of a region, in which a distance between the bank part and the flow path upper lid is less than 0.5 mm, and which is located between adjacent partial flow paths, is defined as a partial flow path interval, and a width of the joining metal located between the adjacent partial flow paths is defined as a joining width, the partial flow path interval is 20 mm or less and the joining width is 3 mm or more in a part or all of the parallel flow path portions.

2. The cooling structure according to claim 1, wherein a part or all of the joining metal is the Al-based plating or the Zn-based plating.

3. The cooling structure according to claim 1 or 2, wherein
a plating damage proportion on an outer surface of the cooling structure is 20% or less, and
the base steel sheet is not exposed on the outer surface of the cooling structure.

4. The cooling structure according to any one of claims 1 to 3, wherein a part of the joint portion includes one or more additional joints selected from the group including a spot weld, a projection weld, a laser weld, and a caulked joint.

5. A battery unit comprising:
a battery cell;
a battery pack in which the battery cell is housed; and
the cooling structure according to any one of claims 1 to 4, wherein
the flow path upper lid of the cooling structure is joined to the battery pack.

6. A battery unit comprising:
a battery cell;
a battery pack in which the battery cell is housed; and
the cooling structure according to any one of claims 1 to 4, wherein
the flow path upper lid of the cooling structure is the battery pack.

7. The battery unit according to claim 5 or 6, wherein
a sheet thickness of a steel sheet forming the battery pack is 0.3 mm to 1.2 mm, and
the steel sheet forming the battery pack has an Al-based plating or a Zn-based plating.

8. A manufacturing method of a cooling structure comprising:
press forming a steel sheet to obtain a press forming member having a groove part and a bank part provided around the groove part;
overlapping and fixing a flow path upper lid which is a flat sheet at a position covering the groove part of the press forming member; and
heating a brazing material disposed between the flow path upper lid and a top portion of the bank part of the press forming member to join opposing surfaces of the flow path upper lid and the bank part to obtain a joint portion forming a flow path through which a cooling liquid is capable of flowing,
wherein
the press forming member and the flow path upper lid are plated steel sheets having a base steel sheet,
the joint portion is made of a joining metal which brazes the base steel sheets of the press forming member and the flow path upper lid to each other,
the flow path includes a parallel flow path portion in which a plurality of partial flow paths extending along a first direction are arranged in a second direction orthogonal to the first direction, and **characterized in that** the plated steel sheets have an Al-based plating having a film thickness of 10.0 µm or more, or a Zn-based plating having a film thickness of 5.0 µm or more, in which a sheet thickness of the plated steel sheets is 0.3 mm to 1.2 mm, and
in a cross section of the parallel flow path portions perpendicular to the first direction, when a width of a region, in which a distance between the bank part and the flow path upper lid is less than 0.5 mm, and which is located between adjacent partial flow paths, is defined as a partial flow path interval, and a width of the joining metal located between the adjacent partial flow paths is defined as a joining width, the partial flow path interval is 20 mm or less and the joining width is 3 mm or more in a part or all of the parallel flow path portions.

9. The manufacturing method of a cooling structure according to claim 8, further comprising:
applying the brazing material to one or both of the top portion of the groove part of the press forming member and a region of the flow path upper lid joined to the top portion before the flow path upper lid is overlapped on the press forming member.

10. The manufacturing method of a cooling structure according to claim 8 or 9, wherein a part or all of the joining metal is the Al-based plating or the Zn-based plating.

11. The manufacturing method of a cooling structure according to any one of claims 8 to 10, wherein
the top portion of the bank part and a part of the flow path upper lid is joined by one or more types of joining means selected from the group including spot welding, projection welding, laser welding, and caulked joining before forming the joint portion, thereby fixing the flow path upper lid and the press forming member.

12. The manufacturing method of a cooling structure according to any one of claims 8 to 11, wherein
the top portion of the bank part is a flat surface, and
an area of a contact section between the fixing jig for fixing the flow path upper lid and the press forming member and the top portion of the bank part is 30% of less of an area of the flat surface forming the top portion of the bank part on the outer surface of the cooling structure.

13. The manufacturing method of a cooling structure according to any one of claims 8 to 12, wherein the brazing material is heated by irradiating a portion in which the brazing material is disposed with a laser beam.

## Patentansprüche

1. Kühlstruktur, umfassend:
ein Pressformelement mit einem Grabenteil und einem um das Grabenteil herum vorgesehenen Dammteil;
einen oberen Strömungswegdeckel, der ein flaches Blech ist, das an einer Position überlappt ist, die den Grabenteil des Pressformelements abdeckt, und eine flache Kühlfläche bildet; und
einen Verbindungsabschnitt, der gegenüberliegende Oberflächen des oberen Strömungswegdeckels und des Dammteils verbindet, um einen Strömungsweg zu bilden, durch den eine Kühlflüssigkeit fließen kann,
wobei
das Pressformelement und der obere Strömungswegdeckel plattierte Stahlbleche mit einem Basisstahlblech sind,
der Verbindungsabschnitt aus einem Verbindungsmetall besteht, das die Basisstahlbleche des Pressformelements und des oberen Strömungswegdeckels miteinander verlötet,
der Strömungsweg einen parallelen Strömungswegabschnitt umfasst, in dem eine Vielzahl von Teilströmungswegen, die sich entlang einer ersten Richtung erstrecken, in einer zweiten Richtung orthogonal zur ersten Richtung angeordnet sind, und
**dadurch gekennzeichnet, dass** die plattierten Stahlbleche eine Al-basierte Plattierung mit einer Filmdicke von 10,0 µm oder mehr, oder eine Zn-basierte Plattierung mit einer Filmdicke von 5,0 µm oder mehr aufweisen, in denen eine Blechdicke der platierten Stahlbleche 0,3 mm bis 1,2 mm beträgt, und
in einem Querschnitt der parallelen Strömungswegabschnitte senkrecht zur ersten Richtung, wenn eine Breite eines Bereichs, in dem ein Abstand zwischen dem Dammteil und dem oberen Strömungswegdeckel weniger als 0,5 mm beträgt, und der sich zwischen benachbarten Teilströmungswegen befindet, als Teilströmungswegintervall definiert wird, und eine Breite des Verbindungsmetalls, das sich zwischen den benachbarten Teilströmungswegen befindet, als Verbindungsbreite definiert wird, das Teilströmungswegintervall 20 mm oder weniger beträgt und die Verbindungsbreite 3 mm oder mehr in einem Teil oder allen der parallelen Strömungswegabschnitte beträgt.

2. Kühlstruktur nach Anspruch 1, wobei ein Teil oder das gesamte Verbindungsmetall die Al-basierte Plattierung oder die Zn-basierte Plattierung ist.

3. Kühlstruktur nach Anspruch 1 oder 2, wobei
ein Plattierungsschadensanteil auf einer Außenfläche der Kühlstruktur 20% oder weniger beträgt, und
das Basisstahlblech auf der Außenfläche der Kühlstruktur nicht freiliegt.

4. Kühlstruktur gemäß einem der Ansprüche 1 bis 3, wobei ein Teil des Verbindungsabschnitts eine oder mehrere zusätzliche Verbindungen umfasst, die aus der Gruppe ausgewählt sind, die eine Punktschweißung, eine Buckelschweißung, eine Laserschweißung und eine Verstemmverbindung umfasst.

5. Batterieeinheit, umfassend:
eine Batteriezelle;
einen Batteriepack, in dem die Batteriezelle untergebracht ist; und
die Kühlstruktur gemäß einem der Ansprüche 1 bis 4, wobei
der obere Strömungswegdeckel der Kühlstruktur mit dem Batteriepack verbunden ist.

6. Batterieeinheit, umfassend:
eine Batteriezelle;
ein Batteriepack, in dem die Batteriezelle untergebracht ist; und
die Kühlstruktur gemäß einem der Ansprüche 1 bis 4, wobei
der obere Strömungswegdeckel der Kühlstruktur das Batteriepack ist.

7. Batterieeinheit gemäß Anspruch 5 oder 6, wobei
die Blechdicke eines Stahlblechs, das den Batteriepack bildet, 0,3 mm bis 1,2 mm beträgt, und
das Stahlblech, das den Batteriepack bildet, eine Al-basierte Plattierung oder ein Zn-basierte Plattierung aufweist.

8. Herstellungsverfahren für eine Kühlstruktur, umfassend:
Pressformen eines Stahlblechs, um ein Pressformelement mit einem Grabenteil und einem um den Grabenteil herum vorgesehenen Dammteil zu erhalten;
Überlappen und Befestigen eines oberen Strömungswegdeckels, der ein flaches Blech ist, an einer Position, die den Grabenteil des Pressformelements abdeckt; und
Erhitzen eines Lötmaterials, das zwischen dem oberen Strömungswegdeckel und einem oberen Abschnitt des Dammteils des Pressformelements angeordnet ist, um gegenüberliegende Oberflächen des oberen Strömungswegdeckels und des Dammteils zu verbinden, um einen Verbindungsabschnitt zu erhalten, der einen Strömungsweg bildet, durch den eine Kühlflüssigkeit fließen kann,
wobei
das Pressformelement und der obere Strömungswegdeckel plattierte Stahlbleche sind, die ein Basisstahlblech aufweisen,
der Verbindungsabschnitt aus einem Verbindungsmetall besteht, das die BasisStahlbleche des Pressformelements und des oberen Strömungswegdeckels miteinander verlötet,
der Strömungsweg einen parallelen Strömungswegabschnitt umfasst, in dem eine Vielzahl von Teilströmungswegen, die sich entlang einer ersten Richtung erstrecken, in einer zweiten Richtung orthogonal zur ersten Richtung angeordnet sind, und
**dadurch gekennzeichnet, dass** die plattierten Stahlbleche eine Al-basierte Plattierung mit einer Filmdicke von 10,0 µm oder mehr, oder eine Zn-basierte Plattierung mit einer Filmdicke von 5,0 µm oder mehr aufweisen, in denen eine Blechdicke der plattierten Stahlbleche 0,3 mm bis 1,2 mm beträgt, und
in einem Querschnitt der parallelen Strömungswegabschnitte senkrecht zur ersten Richtung, wenn eine Breite eines Bereichs, in dem ein Abstand zwischen dem Dammteil und dem oberen Strömungswegdeckel weniger als 0,5 mm beträgt, und der sich zwischen benachbarten Teilströmungswegen befindet, als Teilströmungswegintervall definiert wird, und eine Breite des Verbindungsmetalls, das sich zwischen den benachbarten Teilströmungswegen befindet, als Verbindungsbreite definiert wird, wobei das Teilströmungswegintervall 20 mm oder weniger und die Verbindungsbreite 3 mm oder mehr in einem Teil oder allen der parallelen Strömungswegabschnitte beträgt.

9. Herstellungsverfahren einer Kühlstruktur gemäß Anspruch 8, ferner umfassend:
Aufbringen des Lötmaterials auf einen oder beide von dem oberem Abschnitt des Grabenteils des Pressformelements und einem Bereich des oberen Strömungswegdeckels, der mit dem oberen Abschnitt verbunden ist, bevor der obere Strömungswegdeckel auf dem Pressformelement überlappt wird.

10. Herstellungsverfahren einer Kühlstruktur gemäß Anspruch 8 oder 9, wobei ein Teil oder das gesamte Verbindungsmetall eine Al-basierte Plattierung oder ein Zn-basierte Plattierung ist.

11. Herstellungsverfahren einer Kühlstruktur gemäß einem der Ansprüche 8 bis 10, wobei
der obere Abschnitt des Dammteils und ein Teil des oberen Strömungswegdeckels durch eine oder mehrere Arten von Verbindungsmittel verbunden werden, die aus der Gruppe ausgewählt werden, die Punktschweißen, Buckelschweißen, Laserschweißen und Verstemm-Verbinden umfasst, bevor der Verbindungsabschnitt geformt wird, wodurch der obere Strömungswegdeckel und das Pressformelement befestigt werden.

12. Herstellungsverfahren einer Kühlstruktur gemäß einem der Ansprüche 8 bis 11, wobei
der obere Abschnitt des Dammteils eine flache Oberfläche ist, und
eine Fläche eines Kontaktabschnitts zwischen der Fixiervorrichtung zum Fixieren des oberen Strömungswegdeckels und dem Pressformelement und dem oberen Abschnitt des Dammteils 30% oder weniger einer Fläche der flachen Oberfläche beträgt, die den oberen Abschnitt des Dammteils auf der äußeren Oberfläche der Kühlstruktur bildet.

13. Herstellungsverfahren einer Kühlstruktur gemäß einem der Ansprüche 8 bis 12, wobei das Lötmaterial durch Bestrahlen eines Abschnitts, in dem das Lötmaterial angeordnet ist, mit einem Laserstrahl erhitzt wird.

## Revendications

1. Structure de refroidissement comprenant :
un élément de formage à la presse comportant une partie de rainure et une partie de banc disposée autour de la partie de rainure ;
un couvercle supérieur de trajet d'écoulement qui est une tôle plate superposée à une position recouvrant la partie de rainure de l'élément de formage à la presse et forme une surface de refroidissement plate ; et
une partie de joint qui joint les surfaces opposées du couvercle supérieur de trajet d'écoulement et de la partie de banc pour former un trajet d'écoulement à travers lequel un liquide de refroidissement peut s'écouler,
dans laquelle
l'élément de formage à la presse et le couvercle supérieur de trajet d'écoulement sont des tôles d'acier plaqué comportant une tôle d'acier de base,
la partie de joint est constituée d'un métal de jonction qui brase les tôles d'acier de base de l'élément de formage à la presse et du couvercle supérieur de trajet d'écoulement l'une à l'autre,
le trajet d'écoulement comprend une partie de trajet d'écoulement parallèle dans laquelle une pluralité de trajets d'écoulement partiels s'étendant le long d'une première direction sont disposés dans une deuxième direction orthogonale à la première direction, et
**caractérisé en ce que** les tôles d'acier plaqué comportent un placage à base d'Al ayant une épaisseur de film supérieure ou égale à 10,0 µm, ou un placage à base de Zn ayant une épaisseur de film supérieure ou égale à 5,0 µm, une épaisseur de tôle des tôles d'acier plaqué étant de 0,3 mm à 1,2 mm, et
dans une section transversale des parties de trajet d'écoulement parallèles perpendiculaires à la première direction, lorsqu'une largeur d'une région, dans laquelle une distance entre la partie de banc et le couvercle supérieur de trajet d'écoulement est inférieure à 0,5 mm, et qui est située entre des trajets d'écoulement partiels adjacents, est définie comme un intervalle de trajet d'écoulement partiel, et une largeur du métal de jonction situé entre les trajets d'écoulement partiels adjacents est définie comme une largeur de jonction, l'intervalle de trajet d'écoulement partiel est inférieur ou égal à 20 mm et la largeur de jonction est supérieure ou égale à 3 mm dans une partie ou la totalité des parties de trajet d'écoulement parallèles.

2. Structure de refroidissement selon la revendication 1, dans laquelle une partie ou la totalité du métal de jonction est le placage à base d'Al ou le placage à base de Zn.

3. Structure de refroidissement selon la revendication 1 ou 2, dans laquelle
une proportion de dommages de placage sur une surface externe de la structure de refroidissement est inférieure ou égale à 20 %, et
la tôle d'acier de base n'est pas exposée sur la surface externe de la structure de refroidissement.

4. Structure de refroidissement selon l'une quelconque des revendications 1 à 3, dans laquelle une partie de la partie de joint comprend une ou plusieurs jonctions supplémentaires choisies dans le groupe comprenant une soudure par points, une soudure par projection, une soudure au laser et un joint maté.

5. Unité de batterie comprenant :
une cellule de batterie ;
un bloc-batterie dans lequel la cellule de batterie est logée ; et
la structure de refroidissement selon l'une quelconque des revendications 1 à 4, dans laquelle :
le couvercle supérieur de trajet d'écoulement de la structure de refroidissement est jointe au bloc-batterie.

6. Unité de batterie comprenant :
une cellule de batterie ;
un bloc-batterie dans lequel la cellule de batterie est logée ; et
la structure de refroidissement selon l'une quelconque des revendications 1 à 4, dans laquelle :
le couvercle supérieur de trajet d'écoulement de la structure de refroidissement est le bloc-batterie.

7. Unité de batterie selon la revendication 5 ou 6, dans laquelle
l'épaisseur de tôle d'une tôle d'acier formant le bloc-batterie est de 0,3 mm à 1,2 mm, et
la tôle d'acier formant le bloc-batterie comporte un placage à base d'Al ou un placage à base de Zn.

8. Procédé de fabrication d'une structure de refroidissement comprenant :
le formage à la presse d'une tôle d'acier pour obtenir un élément de formage à la presse comportant une partie de rainure et une partie de banc disposée autour de la partie de rainure ;
le chevauchement et la fixation d'un couvercle supérieur de trajet d'écoulement qui est une tôle plate à une position recouvrant la partie de rainure de l'élément de formage à la presse ; et
le chauffage d'un matériau de brasure disposé entre le couvercle supérieur de trajet d'écoulement et une partie supérieure de la partie de banc de l'élément de formage à la presse pour joindre les surfaces opposées du couvercle supérieur de trajet d'écoulement et de la partie de banc pour obtenir une partie de joint formant un trajet d'écoulement à travers lequel un liquide de refroidissement peut s'écouler,
dans laquelle
l'élément de formage à la presse et le couvercle supérieur de trajet d'écoulement sont des tôles d'acier plaqué comportant une tôle d'acier de base,
la partie de joint est constituée d'un métal de jonction qui brase les tôles d'acier de base de l'élément de formage à la presse et du couvercle supérieur de trajet d'écoulement l'une à l'autre,
le trajet d'écoulement comprend une partie de trajet d'écoulement parallèle dans laquelle une pluralité de trajets d'écoulement partiels s'étendant le long d'une première direction sont disposés dans une deuxième direction orthogonale à la première direction, et
**caractérisé en ce que** les tôles d'acier plaqué comportent un placage à base d'Al ayant une épaisseur de film supérieure ou égale à 10,0 µm, ou un placage à base de Zn ayant une épaisseur de film supérieure ou égale à 5,0 µm, une épaisseur de tôle des tôles d'acier plaqué étant de 0,3 mm à 1,2 mm, et
dans une section transversale des parties de trajet d'écoulement parallèles perpendiculaires à la première direction, lorsqu'une largeur d'une région, dans laquelle une distance entre la partie de banc et le couvercle supérieur de trajet d'écoulement est inférieure à 0,5 mm, et qui est située entre des trajets d'écoulement partiels adjacents, est définie comme un intervalle de trajet d'écoulement partiel, et une largeur du métal de jonction situé entre les trajets d'écoulement partiels adjacents est définie comme une largeur de jonction, l'intervalle de trajet d'écoulement partiel est inférieur ou égal à 20 mm et la largeur de jonction est supérieure ou égale à 3 mm dans une partie ou la totalité des parties de trajet d'écoulement parallèles.

9. Procédé de fabrication d'une structure de refroidissement selon la revendication 8, comprenant en outre :
l'application du matériau de brasure sur l'une ou les deux parties supérieures de la partie de rainure de l'élément de formage à la presse et sur une région du couvercle supérieur de trajet d'écoulement jointe à la partie supérieure avant que le couvercle supérieur de trajet d'écoulement ne se chevauche sur l'élément de formage à la presse.

10. Procédé de fabrication d'une structure de refroidissement selon la revendication 8 ou 9, dans lequel une partie ou la totalité du métal de jonction est le placage à base d'Al ou le placage à base de Zn.

11. Procédé de fabrication d'une structure de refroidissement selon l'une quelconque des revendications 8 à 10, dans lequel :
la partie supérieure de la partie de banc et une partie du couvercle supérieur de trajet d'écoulement sont jointes par un ou plusieurs types de moyens de jonction choisis dans le groupe comprenant le soudage par points, le soudage par projection, le soudage au laser et la jonction calfeutrée avant de former la partie de joint, fixant ainsi le couvercle supérieur de trajet d'écoulement et l'élément de formage à la presse.

12. Procédé de fabrication d'une structure de refroidissement selon l'une quelconque des revendications 8 à 11, dans lequel :
la partie supérieure de la partie de banc est une surface plane, et
une aire d'une section de contact entre le gabarit de fixation pour fixer le couvercle supérieur de trajet d'écoulement et l'élément de formage à la presse et la partie supérieure de la partie de banc est inférieure ou égale à 30 % d'une aire de la surface plane formant la partie supérieure de la partie de banc sur la surface externe de la structure de refroidissement.

13. Procédé de fabrication d'une structure de refroidissement selon l'une quelconque des revendications 8 à 12, dans lequel le matériau de brasure est chauffé par irradiation d'une partie dans laquelle le matériau de brasure est disposé avec un faisceau laser.
